# EUROPEAN PATENT APPLICATION

(11) **EP 4 729 917 A1**
(43) Date of publication of application: **22.04.2026**
(21) Application number: 24825896.4
(22) Date of filing: 18.06.2024
(51) Int. Cl.: G01N 1/06, B26D 1/00, B26D 3/00, B26D 3/28

(54) **BLADE FOR MICROTOMES**

(30) Priority: 19.06.2023 JP 2023100233
(71) Applicant: Kabushiki Kaisha Finetec, Yanagawa-shi, Fukuoka 832-0081 (JP)
(72) Inventor: MOTOKI, Toshihiko, Yanagawa-shi, Fukuoka 832-0081 (JP); MOTOKI, Hiroshi, Yanagawa-shi, Fukuoka 832-0081 (JP)
(74) Representative: Winter, Brandl - Partnerschaft mbB
(86) International application number: PCT/JP2024/022050
(87) International publication number: WO 2024/262495

(57) **Abstract**

To provide a blade for microtomes, the blade suppressing chipping, exhibiting excellent cutting performance and durability, and achieving favorable cutting, irrespective of hardness of a specimen to be cut out. A blade for microtomes, the blade including: a blade body including a base portion and a sharpened portion 1B, the base portion having a flat plate shape, the sharpened portion 1B being formed at a tip of the base portion; and a water-repellent DLC thin film 2 formed on the sharpened portion 1B, wherein a contact angle of water on the water-repellent DLC thin film 2 is 90 degrees or more, a radius of curvature (R1) of a distal end E of the sharpened portion 1B is 15 nm or more and 150 nm or less, a radius of curvature (R2) of a distal end F of a cutting edge including the water-repellent DLC thin film 2 is 30 nm or more and 250 nm or less, and is larger than the radius of curvature (R1) of the distal end E of the sharpened portion 1B, and a film thickness (d) of the water-repellent DLC thin film 2 is 15 nm or more and 150 nm or less.

## Description

### Technical Field

The present invention relates to a blade for microtomes.

### Background Art

A microtome is a device used to prepare specimens for optical microscopic observation or the like by cutting materials into thin pieces. To improve cutting performance and durability of a blade of the microtome, coating is applied to the surface of the blade. For example, Patent Literature 1 discloses a durable cutting blade including a cutting edge portion on which a hard carbon film of approximately several micrometers is formed by a PVD method.

### Citation List

### Patent Literature

Patent Literature 1: Japanese Patent Laid-Open No. 02-041195

### Summary of Invention

### Technical Problem

In recent years, particularly in the fields of medicine and biology, an extremely large number of ultra-thin specimens are prepared each day using microtomes and hence, further increases in cutting speed and further improvement of durability have been required.

To reduce frictional resistance on the blade surface and thereby prevent the cut-out specimen from sticking to the blade surface, water repellency is imparted to the cutting edge. However, it cannot be said that the durable cutting blade of Patent Literature 1 exhibits sufficient water repellency at the cutting edge, and it is necessary to further improve water repellency to allow a thin specimen to be extracted without damage. The cutting performance and durability of the durable cutting blade are insufficient for cutting out specimens having a thickness of several micrometers, and may therefore cause variation in the film thickness of cut-out specimens. Accordingly, there is room for improvement.

There are various objects to be cut out (objects to be cut) using a microtome, ranging from soft tissues, such as kidneys, hearts, livers, lungs, brains, mammary glands, and fat to hard tissues, such as bones, teeth, calcified lungs, and calcified kidneys, and there are also various methods for fixing such tissues. However, when a hard specimen is cut out using a microtome blade suitable for cutting out soft specimens, problems are likely to occur, for example, chipping easily occurs or cut-out ultra-thin specimens have variations in thickness. In view of the above, to prevent occurrence of chipping, it is conventionally necessary for a microtome to use different microtome blades having different wedge angles depending on the specimen to be cut out. Microtome blades suitable for cutting out hard specimens have a large wedge angle to prevent chipping (chipping) on the cutting edge. For example, the wedge angle of a microtome blade for soft specimens is 22 degrees, whereas the wedge angle of a microtome blade used for cutting hard specimens, such as water-soluble resin blocks or frozen blocks, is 35 degrees or 45 degrees. However, measures to prevent chipping are still insufficient, and there has been a demand for a microtome blade that is less likely to cause chipping. In addition, microtome blades suitable for cutting out hard specimens have a large wedge angle and thus tend to exhibit reduced cutting performance for soft specimens, and therefore improvements are required.

The present invention has been made in view of the above-mentioned circumstances, and it is an object of the present invention to provide a blade for microtomes, the blade suppressing chipping, exhibiting excellent cutting performance and durability, and achieving favorable cutting, irrespective of hardness of a specimen to be cut out (object to be cut).

### Solution to Problem

Inventors of the present invention have conducted extensive studies to solve the above-mentioned problem and, as a result, found that the following inventions meet the above-mentioned object, thereby reaching the present invention. That is, the present invention relates to the following inventions.
<1> A blade for microtomes, the blade including: a blade body including a base portion and a sharpened portion, the base portion having a flat plate shape, the sharpened portion being formed at a tip of the base portion; and a water-repellent DLC thin film formed on the sharpened portion, wherein a contact angle of water on the water-repellent DLC thin film is 90 degrees or more, a radius of curvature (R1) of a distal end of the sharpened portion is 15 nm or more and 150 nm or less, a radius of curvature (R2) of a distal end of a cutting edge including the water-repellent DLC thin film is 30 nm or more and 250 nm or less, and is larger than the radius of curvature (R1) of the distal end of the sharpened portion, and a film thickness (d) of the water-repellent DLC thin film is 15 nm or more and 150 nm or less.
<2> The blade for microtomes according to the above-mentioned <1>, wherein a wedge angle θ is 15 to 50 degrees.
<3> The blade for microtomes according to the above-mentioned <1> or <2>, wherein the water-repellent DLC thin film contains fluorine and/or silicon.
<4> The blade for microtomes according to any one of the above-mentioned <1> to <3>, wherein the blade body is made of cemented carbide.
<5> The blade for microtomes according to the above-mentioned <4>, wherein a binder content in the cemented carbide is 0 mass% or more and 24 mass% or less.
<6> The blade for microtomes according to any one of the above-mentioned <1> to <3>, wherein the blade body is made of stainless steel.
<7> The blade for microtomes according to any one of the above-mentioned <1> to <6>, wherein the contact angle of water on the water-repellent thin film is 90 degrees or more and 135 degrees or less.
<8> The blade for microtomes according to any one of the above-mentioned <1> to <7>, wherein the water-repellent DLC thin film is a thin film formed of a DLC film exhibiting water repellency, or a thin film formed by forming a water-repellent layer on a surface of a DLC film.
<9> The blade for microtomes according to the above-mentioned <8>, wherein the water-repellent layer is a water repellent monomolecular film.

### Advantageous Effect of Invention

According to the present invention, it is possible to provide a blade for microtomes, the blade suppressing chipping, exhibiting excellent cutting performance and durability, and achieving favorable cutting, irrespective of hardness of a specimen to be cut out.

### Brief Description of Drawings

[Figure 1] Figure 1 is a diagram of a blade according to an embodiment of the present invention, wherein (A) is a diagram showing the entire blade, and (B) is a diagram showing a portion of the blade in an enlarged manner.
[Figure 2] Figure 2 is a diagram showing a distal end of a cutting edge of the blade shown in Figure 1, and an area around the distal end of the cutting edge.
[Figure 3] Figure 3 is a diagram showing a distal end of a cutting edge of a blade body of another embodiment, and an area around the distal end of the cutting edge.
[Figure 4] Figure 4 is a diagram for illustrating a rake angle and a flank angle of the blade shown in Figure 1.
[Figure 5] Figure 5 is a diagram for illustrating movement of a sliding microtome blade in a slicing test in Example, and is also a top plan view.
[Figure 6] Figure 6 shows images of thin slices obtained by slicing with microtome blades of Example 1 and Comparison Example 1, at 500 times magnification. Figure 6(A) is the image of the thin slice that is cut out using the microtome blade of Comparison Example 1, and Figure 6(B) is the image of the thin slice that is cut out using the microtome blade of Example 1.
[Figure 7] Figure 7 is a diagram of a blade according to another embodiment of the present invention, wherein Figure 7(A) is a diagram showing the entire blade, and Figure 7(B) is a diagram showing a portion of the blade in an enlarged manner.

### Description of Embodiments

Embodiments of the present invention will be described in detail hereinafter. However, the description of components described below is merely one example (representative example) of the embodiment of the present invention, and the present invention is not limited to the following content as long as the gist of the present invention is not changed. Note that when the expression "from a value to a value" is used in this specification, such an expression is intended to encompass numerical values or physical property values within a range around the values.

### [Blade for microtomes of the present invention]

A blade for microtomes of the present invention (hereinafter may be referred to as "microtome blade of the present invention") is a blade for microtomes, the blade including: a blade body including a base portion and a sharpened portion, the base portion having a flat plate shape, the sharpened portion being formed at a tip of the base portion; and a water-repellent DLC thin film formed on the sharpened portion, wherein a contact angle of water on the water-repellent DLC thin film is 90 degrees or more, a radius of curvature (R1) of a distal end of the sharpened portion is 15 nm or more and 150 nm or less, a radius of curvature (R2) of a distal end of a cutting edge including the water-repellent DLC thin film is 30 nm or more and 250 nm or less, and is larger than the radius of curvature (R1) of the distal end of the sharpened portion, and a film thickness (d) of the water-repellent DLC thin film is 15 nm or more and 150 nm or less.

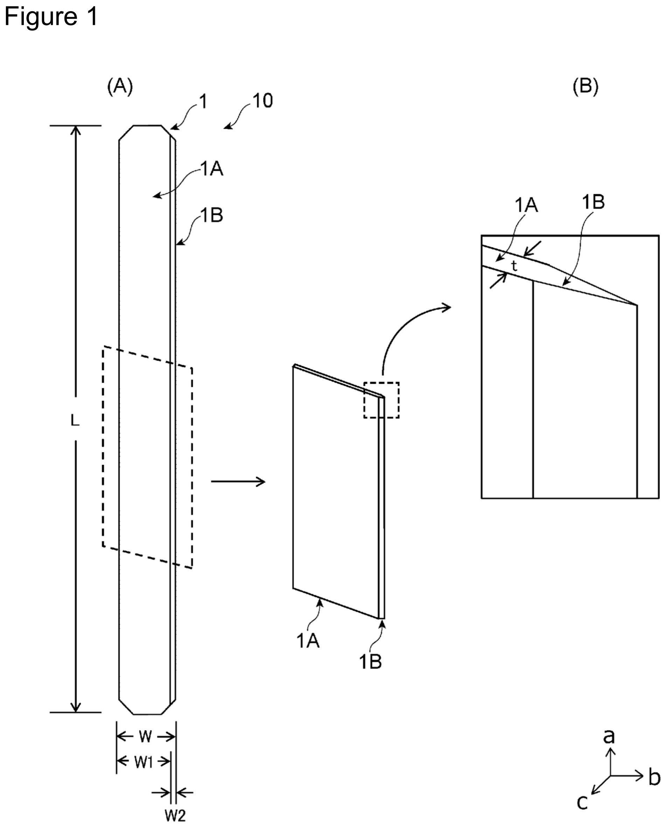

In the present embodiment, the radius of curvature (R1) of the distal end of the sharpened portion and the radius of curvature (R2) of the distal end of the cutting edge including the water-repellent DLC thin film can be calculated from an image of a width-thickness cross section (bc cross section in Figure 1) of the blade, the image being photographed using an SEM. Each of the radius of curvature (R1) of the distal end of the sharpened portion and the radius of curvature (R2) of the distal end of the cutting edge including the water-repellent DLC thin film is a mean value of the radii of curvature calculated at three points along the cutting edge in the length direction, that is, at the left position, the center position, and the right position. The film thickness (d) of the water-repellent DLC thin film is a distance from the distal end of the sharpened portion to the distal end of the cutting edge including the water-repellent DLC thin film, and is a value obtained by subtracting the radius of curvature (R1) of the distal end of the sharpened portion from the radius of curvature (R2) of the distal end of the cutting edge including the water-repellent DLC thin film. The details will be described later in Example.

In the microtome blade of the present invention, the water-repellent DLC thin film is formed on the sharpened portion of the blade body, the contact angle of water on the water-repellent DLC thin film being 90 degrees or more. Consequently, the cut-out specimen is easily separated from the blade surface, cutting performance does not change depending on hardness of the specimen to be cut out, and excellent chipping resistance and excellent durability are achieved.

In the microtome blade of the present invention, the radius of curvature (R1) of the distal end of the sharpened portion of the blade body is 15 nm or more and 150 nm or less. When "R1" is less than 15 nm, chipping tends to occur, thereby causing scalpel scratches on the cut-out specimen. In contrast, when "R1" is more than 150 nm, cutting performance is low and a cutting load increases, and a thin specimen cannot be cut out at the level of several micrometers. Accordingly, "R1" is preferably 30 nm or more, more preferably 50 nm or more, even more preferably 60 nm or more, and further preferably 70 nm or more. Further, "R1" is preferably 130 nm or less, more preferably 120 nm or less, and further preferably 110 nm or less.

In the microtome blade of the present invention, the radius of curvature (R2) of the distal end of the cutting edge including the water-repellent DLC thin film is 30 nm or more and 250 nm or less, and is larger than the radius of curvature (R1) of the distal end of the sharpened portion. When "R2" is less than 30 nm, chipping tends to occur and the water-repellent DLC thin film tends to peel off. In contrast, when "R2" is more than 250 nm, cutting performance is low and a cutting load increases, and a thin specimen cannot be cut out at the level of several micrometers. Accordingly, "R2" is preferably 50 nm or more, more preferably 60 nm or more, even more preferably 75 nm or more, and further preferably 90 nm or more. Further, "R2" is preferably 200 nm or less, and more preferably 180 nm or less.

In the microtome blade of the present invention, the film thickness (d) of the water-repellent DLC thin film is 15 nm or more and 150 nm or less. When "d" is less than 15 nm, it is difficult to uniformly form the water-repellent DLC thin film and hence, scalpel scratches easily occur on the cut-out specimen, hardness is insufficient, the water-repellent DLC thin film tends to peel off due to friction, and durability is low. In contrast, when "d" is more than 150 nm, cutting performance is low, and the water-repellent DLC thin film peels off with cracking, and durability is low. Accordingly, "d" is preferably 20 nm or more, more preferably 30 nm or more, even more preferably 40 nm or more, and further preferably 50 nm or more. Further, "d" is preferably 130 nm or less, and more preferably 110 nm or less.

With the configuration of the microtome blade of the present invention, cutting quality can be maintained, chipping can be suppressed, and lifespan of the blade can be increased without being significantly affected by hardness of the specimen to be cut out.

The wedge angle of the microtome blade of the present invention is suitably selected according to the kind of specimen to be cut out, the purpose, or the like. The wedge angle θ is preferably from 15 to 50 degrees, and more preferably from 15 to 35 degrees. The wedge angle θ is set to 15 to 50 degrees and hence, favorable cutting quality can be achieved even when a thin specimen is cut out.

In the microtome blade of the present invention, the blade body may be made of cemented carbide. By forming the blade body using cemented carbide, even when a thin specimen is cut out, it is possible to suppress a phenomenon in which the cut-out specimen is undulated.

In the microtome blade of the present invention, it is preferable that the blade body be made of cemented carbide, and a binder content in the cemented carbide be 0 mass% or more and 24 mass% or less. By using such cemented carbide, the blade can be easily and precisely machined, and the distal end of the sharpened portion of the blade body can be easily machined into a desired shape.

From the viewpoint of adhesion between the blade body and the water-repellent DLC thin film, it is preferable that cemented carbide forming the blade body of the microtome blade of the present invention contain tungsten carbide (WC) and cobalt (Co), and a cobalt content in the cemented carbide be 14 mass% or more.

In the microtome blade of the present invention, the contact angle of water on the water-repellent DLC thin film is preferably from 90 degrees to 135 degrees, more preferably from 95 degrees to 130 degrees, even more preferably from 100 degrees to 125 degrees, and further preferably from 105 degrees to 120 degrees. With such a contact angle, a specimen is less likely to stick to the blade surface, thereby improving cutting performance.

In the microtome blade of the present invention, the contact angle of water on the water repellent thin film is preferably 90 degrees to 135 degrees, more preferably from 95 degrees to 130 degrees, even more preferably from 100 degrees to 125 degrees, and further preferably from 105 degrees to 120 degrees,
"R1" is from 15 nm to 150 nm, preferably from 30 nm to 145 nm, more preferably from 40 nm to 140 nm, even more preferably from 50 nm to 130 nm, even more preferably from 60 nm to 120 nm, even more preferably from 70 nm to 110 nm, and further preferably from 75 nm to 100 nm,
"R2" is from 30 nm to 250 nm, preferably from 30 nm to 200 nm, more preferably from 50 nm to 180 nm, even more preferably from 60 nm to 175 nm, even more preferably from 75 nm to 170 nm, even more preferably from 80 nm to 160 nm, and further preferably from 90 nm to 150 nm, and
"d" is from 15 nm to 150 nm, preferably from 20 nm to 130 nm, more preferably from 25 nm to 125 nm, even more preferably from 30 nm to 120 nm, even more preferably from 40 nm to 100 nm, and further preferably from 50 nm to 80 nm.

Examples of objects to be cut out (objects to be cut) using the microtome blade of the present invention include kidneys, hearts, livers, lungs, brains, mammary glands, fat, bones, teeth, calcified lungs, and calcified kidneys. With the configuration of the microtome blade of the present invention, it is possible to achieve favorable cutting irrespective of hardness of the object to be cut out. In addition, the microtome blade of the present invention can be utilized for both a sliding cutting method and a rotary cutting method.

### [Embodiment 1]

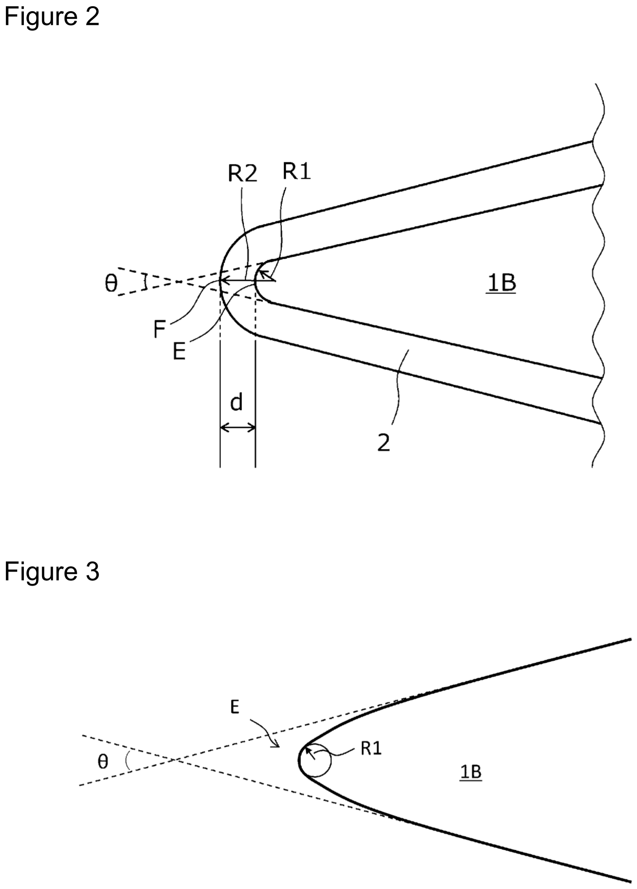

Hereinafter, a blade according to an embodiment of the present invention will be described with reference to Figure 1 to Figure 3. Figure 1 is a diagram of the entire blade according to the embodiment of the present invention, and is also a diagram showing a portion of the blade in an enlarged manner. Figure 2 is a diagram showing the distal end of a cutting edge of the blade shown in Figure 1 and an area around the distal end of the cutting edge. Figure 3 is a diagram showing the distal end of a cutting edge of a blade body of another embodiment, and an area around the distal end of the cutting edge.

As shown in Figure 1, a blade 10 according to the embodiment of the present invention is a flat blade in which cemented carbide is used as a raw material, and the cutting edge is formed into a straight line shape. The blade 10 is used as, for example, a replacement blade for a microtome that slices a specimen, such as bone or cellular tissue embedded in paraffin, into ultra-thin sections having thicknesses on the order of micrometers to several tens of nanometers (approximately 1 to 3 µm, for example).

A blade body 1 of the blade 10 shown in Figure 1 is formed to have a blade length L of approximately 80 mm, a thickness t of approximately 0.25 mm, and a width W of approximately 8 mm. The blade body 1 includes a base portion 1A and a sharpened portion 1B, the base portion 1A having a width W1 of approximately 7.3 mm, the sharpened portion 1B extending from the base portion 1A to form the tip and having a width W2 of approximately 0.7 mm.

Both ends of the cutting edge of the blade body 1 are machined (chamfered) by cutting away triangular portions. In the present embodiment, corner portions at four corners are chamfered. Each chamfer is formed by cutting away an isosceles triangle having equal sides of approximately 2 mm. The blade body 1 has a blade length L of approximately 80 mm. Even when a shear angle of 45° is applied relative to an object to be cut (for example, sliced sample) having a width of approximately 30 mm in a sliding microtome, the length corresponding to 1/cos45° (1.4114) times is approximately 42 mm. Accordingly, the chamfered corner portions at four corners of the blade 10 are non-cutting portions.

The sharpened portion 1B is formed into a tapered shape that is gradually tapered from the base portion 1A. The sharpened portion 1B shown in Figure 1 has a shape in which an angle between the front and rear surfaces of the sharpened portion 1B is constant from the base portion 1A to a distal end E of the cutting edge. The shape of the sharpened portion 1B is not limited to such a shape, and a multi-stage blade configuration may be adopted in which a plurality of regions having different angles between the front and rear surfaces of the sharpened portion 1B are formed between the base portion 1A and the distal end E of the cutting edge. The sharpened 1B has a shape that is symmetrical in the front-rear direction. However, the sharpened 1B may have a shape that is asymmetrical in the front-rear direction.

As shown in Figure 2, the distal end E of the cutting edge of the sharpened portion 1B is formed to have a wedge angle (cutting edge forming angle) θ of 15 degrees to 50 degrees. The wedge angle θ of the sharpened portion 1B of the blade 10 is an angle (cutting edge angle) formed at the distal end E of the sharpened portion 1B, and is an angle at the intersection between extensions of front and rear surfaces of the blade (blade surfaces) of the sharpened portion 1B. Although a smaller wedge angle θ improves cutting quality, such an angle tends to cause chipping, thereby shortening lifespan. In contrast, an extremely large wedge angle θ lowers cutting quality.

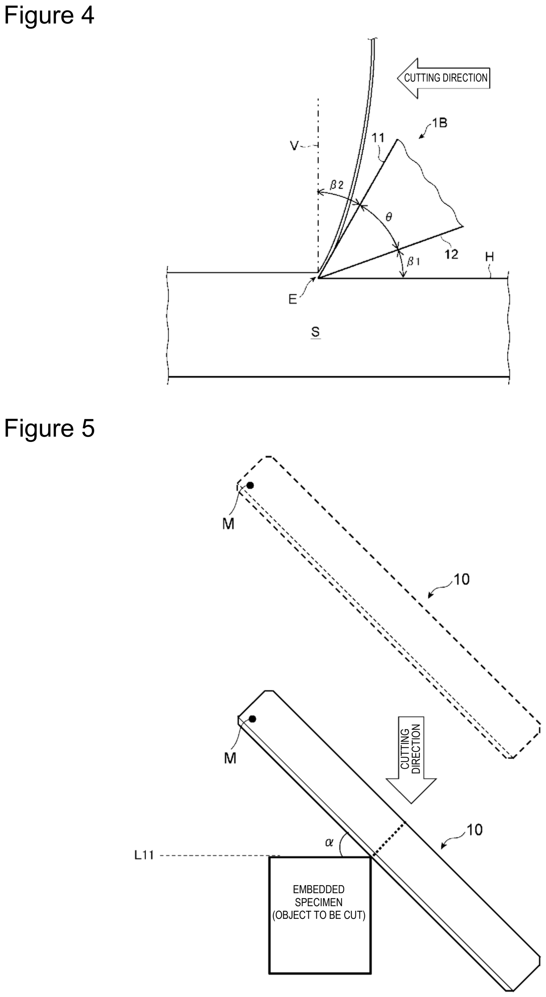

The wedge angle θ is an angle formed between the rake surface and the flank surface of the blade when a specimen is cut using the blade 10. As shown in Figure 4, an angle formed between a reference line H, which is parallel to a direction in which the blade moves (cutting direction), and a flank surface 12 is a flank angle β1, an angle formed between a reference line V, which is orthogonal to the direction in which the blade moves, and a rake surface 11 is a rake angle β2, and the sum of the wedge angle θ, the flank angle β1, and the rake angle β2 is 90 degrees. The flank angle β1 and the rake angle β2 are suitably set according to the wedge angle θ. For example, when a specimen is cut using a blade 10 having a wedge angle θ of 20 to 35 degrees, the flank angle β1 may be set to 10 degrees to 25 degrees, and the rake angle β2 may be set to 60 degrees to 30 degrees (β2 = 90 degrees - β1 - θ).

The blade 10 includes a high-hardness water-repellent DLC thin film, thus exhibiting excellent durability and excellent peelability of the cut-out specimen. Accordingly, even when the wedge angle θ is increased compared with a conventional microtome blade for soft specimens, cutting quality can be maintained, and by increasing the wedge angle θ, it is possible to make chipping less likely to occur even when a hard specimen is cut. From these viewpoints, although the shear angle of the microtome and the like are also taken into consideration, to maintain cutting quality, suppress chipping, and increase lifespan without being significantly affected by hardness of the specimen to be cut out, the wedge angle θ is preferably 15 degrees to 45 degrees, and 18 degrees to 40 degrees, 20 to 35 degrees, 22 degrees to 34 degrees, 23 degrees to 33 degrees, 25 degrees to 31 degrees, 26 degrees to 30 degrees, or 27 degrees to 29 degrees is more preferable.

The distal end E of the sharpened portion 1B shown in Figure 1 and Figure 2 has a shape in which straight lines are inclined from both surfaces of the base portion 1A toward the distal end E of the cutting edge to approach each other, and are connected. However, as shown in Figure 3, the sharpened portion 1B may have a shape in which straight lines curve toward and are connected at the distal end E of the cutting edge. The radius of curvature (R1) and the wedge angle θ of the distal end E in this case are as shown in Figure 3.

The radius of curvature (R1) of the distal end E of the sharpened portion 1B is 15 nm to 150 nm.

As shown in Figure 2, a water-repellent DLC thin film 2 is formed at the sharpened portion 1B. The radius of curvature (R2) of a distal end F of the cutting edge including the water-repellent DLC thin film 2 is larger than the radius of curvature (R1) of the distal end E of the sharpened portion 1B, and is 30 nm to 250 nm. The film thickness (d) of the water-repellent DLC thin film 2 is 15 nm to 150 nm.

### (Cemented carbide)

Cemented carbide (Hartmetalle, hard metals, Cemented Carbide) forming the blade body 1 is a composite material obtained by sintering metal particles made of a carbide of metal belonging to Group IVa, Va, or VIa of the periodic table with a binder made of ferrous metal, such as Fe, Co, Ni. Cemented carbide forming the blade body 1 is not particularly limited, and a WC-Co-based alloy, a WC-TiC-Co-based alloy, a WC-TaC-Co-based alloy, a WC-TiC-TaC-Co-based alloy, a WC-Ni-based alloy, a WC-Ni-Cr-based alloy, or other alloys may be used.

For example, a cemented carbide material containing WC and Co can be obtained by sintering a mixture containing WC particles and Co. Although WC particles of various sizes may be used, from the viewpoint of preventing chipping during machining of the distal end portion of the cutting edge, the particle size of WC particles is preferably from 0.1 µm to 0.7 µm, and more preferably from 0.3 µm to 0.7 µm. Note that "particle size" refers to the average particle size measured by the Sub Sieve Sizer method. In the Sub Sieve Sizer method, air is made to permeate through a specimen, and the flow rate and pressure drop are measured to obtain a specific surface area, from which an average particle size is calculated. The Fischer method or Blaine's method may be used as a permeation method.

When the particle size of WC particles to be used is larger than the diameter (R1×2) of a target circle of curvature at the distal end E of the sharpened portion 1B, it is necessary to grind WC so that the distal end E has a target radius of curvature (R1). At this point of operation, it is important that the cutting stress be lower than the bonding force between WC and Co. When the cutting stress is larger than this bonding force, WC particles peel off, resulting in chipping-like damage on the blade surface. From the viewpoint of strength, the hardness of the cemented carbide material is preferably 85 (HRC) or more, the deflective strength of the cemented carbide material is preferably 3.0 GPa to 4.0 GPa, and the Young's modulus of the cemented carbide material is preferably around 570 GPa.

In consideration of balance between hardness, resistance to wear, resistance to chipping, adhesion of the water-repellent DLC thin film, and formability of the water-repellent DLC, the binder content in cemented carbide is preferably from 14 mass% to 30 mass%, more preferably from 16 mass% to 27 mass%, even more preferably from 17 mass% to 25 mass%, even more preferably from 17 mass% to 24 mass%, and further preferably from 18 mass% to 22 mass%.

It is preferable that the cemented carbide forming the blade body 1 be a cemented carbide containing WC and Co, and the cobalt content in the cemented carbide be 14 mass% or more. In general, it is considered that the water-repellent DLC thin film contains carbon atoms, thereby exhibiting high affinity with a base material containing carbon atoms, and it is generally recognized that a lower content of Co (cobalt) serving as a binder in a cemented carbide facilitates the formation of a DLC coating. It is considered that when the proportion of WC in the cemented carbide containing WC and Co is high, the alloy exhibits high hardness, thereby providing a blade that undergoes less wear, and such a high WC content is preferable also from the viewpoint of suppressing undulation of the cut-out specimen. However, the inventors of the present invention have found that an increase in the proportion of WC readily causes chipping on the blade and reduces the adhesion of the water-repellent DLC thin film, resulting in the film easily peeling off, whereas an increase in the proportion of Co improves the adhesion of the water-repellent DLC thin film. By setting the Co content in the cemented carbide containing WC and Co to a predetermined amount or more, the adhesion between the blade body and the water-repellent DLC thin film is improved, thereby making chipping less likely to occur.

To improve the adhesion of the water-repellent DLC thin film and to improve a bonding force between WC and Co, the cobalt content in the cemented carbide containing WC and Co is preferably 14 mass% or more, more preferably 16 mass% or more, even more preferably 17 mass% or more, and further preferably 18 mass% or more.

In contrast, when the proportion of WC is low, wear readily occurs, and such a cemented carbide is not suitable for use as a blade and hence, the cobalt content in the cemented carbide is preferably 30 mass% or less, more preferably 27 mass% or less, even more preferably 25 mass% or less, even more preferably 24 mass% or less, and further preferably 22 mass% or less.

In consideration of balance between hardness, resistance to wear, resistance to chipping, adhesion of the water-repellent DLC thin film, and formability of the water-repellent DLC, the cobalt content in the cemented carbide is preferably from 14 mass% to 30 mass%, more preferably from 16 mass% to 27 mass%, even more preferably from 17 mass% to 25 mass%, even more preferably from 17 mass% to 24 mass%, and further preferably from 18 mass% to 22 mass%.

The cemented carbide of the blade body 1 is not limited to a composite material made of a carbide of metal belonging to Group IVa, Va, or VIa of the periodic table and the binder made of ferrous metal, such as Fe, Co, or Ni. The cemented carbide of the blade body 1 may be made of a material that does not contain a binder obtained by sintering a carbide of metal belonging to Group IVa, Va, or VIa of the periodic table (binderless material). In the microtome blade of the present invention, the water-repellent DLC thin film having a particular thickness is formed on the sharpened portion. Accordingly, even when the blade body is made of a binderless cemented carbide or a cemented carbide having a low proportion of binder, chipping can be suppressed. From the viewpoint of ease of machining of the distal-end shape of the sharpened portion of the blade body, the binder content in the cemented carbide is preferably from 0 mass% to 24 mass%, and more preferably from 6 mass% to 24 mass%.

The blade body 1 is not limited to cemented carbide, and may be made of stainless steel, special steel, or the like.

### (Water-repellent DLC thin film)

The water-repellent DLC thin film 2 is a thin film formed of DLC containing fluorine, silicon, or the like so as to exhibit water repellency. The DLC is an abbreviation of diamond-like carbon, and is a film having an amorphous structure that contains, as a main component, carbon exhibiting carbon-carbon bonding of both diamond and graphite types.

The contact angle of water on the water-repellent DLC thin film 2 is 90 degrees or more. Higher water repellency makes the cut-out specimen less likely to stick to the blade surface, thereby improving cutting performance. Accordingly, the contact angle of water on the water-repellent DLC thin film 2 is preferably 95 degrees or more, more preferably 100 degrees or more, and further preferably 105 degrees or more. Note that "contact angle of water" is a mean value of contact angles of water measured at three points on the water-repellent DLC thin film 2 along the length direction (the direction shown by an arrow "a" in Figure 1), that is, at the left position, the center position, and the right position.

Although the contact angle of water on the water-repellent DLC thin film 2 has no particular upper limit, in consideration of productivity or the like, the contact angle may be set to, for example, 135 degrees or less, 130 degrees or less, 125 degrees or less, 120 degrees or less, or the like.

The water-repellent DLC thin film 2 is formed at the sharpened portion 1B. It is sufficient that the water-repellent DLC thin film 2 be formed at least on the distal end E side of the sharpened portion 1B (for example, in a region having a width of 1 µm to 20 µm that includes the distal end E of the sharpened portion 1B). However, to prevent sticking of the cut-out specimen to the sharpened portion 1B and to facilitate separation of the cut-out specimen, it is preferable that the water-repellent DLC thin film 2 be formed on the entire sharpened portion 1B.

### [Embodiment 2]

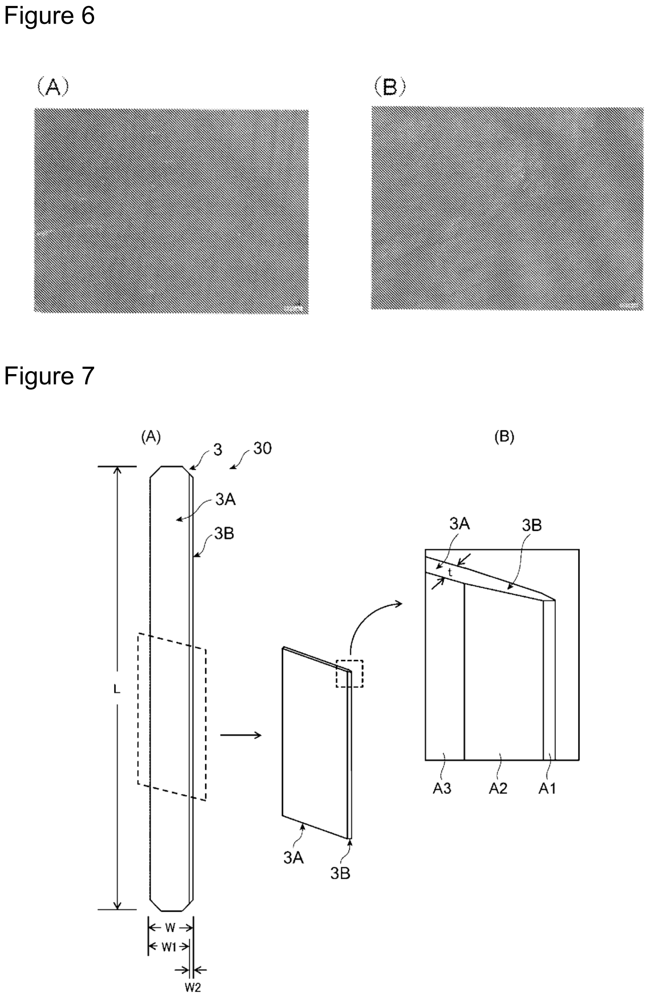

A blade 30 for microtomes shown in Figure 7 is formed using cemented carbide as a raw material, and a cutting edge has a two-stage blade configuration. A blade body 3 of the blade 30 includes a base portion 3A and a sharpened portion 3B. The sharpened portion 3B has a first region A1 and a second region A2, the first region A1 including the distal end portion of a cutting edge, the second region A2 extending from the first region A1 to the base portion 3A, which forms a third region A3. The second region A2 has a larger width than the first region A1. A water-repellent DLC thin film (not shown in the drawing) formed at the sharpened portion 3B of the blade body 3 of the blade 30 includes a DLC thin film and a water-repellent layer, which is formed on the surface of the DLC thin film, and a film thickness (d) (that is, a total thickness of the DLC thin film and the water-repellent layer) is 15 nm to 150 nm. The water-repellent layer that forms the water-repellent DLC thin film of the blade 30 is a water repellent coating layer that is formed by applying a water repellent coating agent by coating. For example, the water-repellent layer may be formed of a fluorine-based monomolecular film having a thickness of approximately 10 nm and formed by applying a fluorine-based coating agent by coating. However, the water-repellent layer is not limited to such a layer.

The blade 30 is substantially the same as the blade 10 except that the blade 30 differs in the shape of the blade body and in the configuration of the water-repellent DLC thin film. A contact angle of water on the water-repellent DLC thin film of the blade 30, a radius of curvature (R1) of a distal end of a sharpened portion, a radius of curvature (R2) of a distal end of a cutting edge, the film thickness (d) of the water-repellent DLC thin film, and a wedge angle θ are the same as those of the blade 10, and preferred ranges thereof are also the same as those of the blade 10.

The water-repellent DLC thin film is not particularly limited provided that the water-repellent DLC thin film includes a film having an amorphous structure containing carbon, and the front surface of the thin film has water repellency. However, it is preferable that the water-repellent DLC thin film contain carbon, fluorine, and/or silicon. The water-repellent DLC thin film may be a film in which the entire thin film contains fluorine, silicon, or the like, or may be a film in which only the surface of the DLC thin film is modified by fluorine, silicon, or the like to exhibit water repellency.

To be more specific, examples of the water-repellent DLC thin film forming the microtome blade of the present invention include a thin film formed of a DLC film exhibiting water repellency and a thin film formed by forming a water-repellent layer on the surface of a DLC film. An example of the thin film formed of a DLC film exhibiting water repellency is a thin film formed of a DLC film containing fluorine or silicon. Examples of the thin film formed by forming the water-repellent layer on the surface of the DLC film include a thin film formed by forming a water-repellent layer on the surface of a DLC film that does not exhibit water repellency and a thin film formed by forming a water-repellent layer on the surface of a thin DLC film that exhibits water repellency. Examples of the water-repellent layer include a water repellent monomolecular film and other films.

### (Method for manufacturing microtome blade of the present invention)

The microtome blade of the present invention can be manufactured by forming a water-repellent DLC from the cutting edge side of the sharpened portion of the blade body made of, for example, cemented carbide or stainless steel. A method for forming the DLC thin film is not particularly limited, and a known method may be utilized, such as plasma CVD that utilizes a hydrocarbon gas as a carbon source, pulsed plasma CVD, thermal electron impact ionization vapor deposition, arc ion plating that utilizes solid carbon (graphite) as a carbon source, magnetron sputtering, ion beam sputtering, or other methods.

For example, by utilizing a hydrocarbon gas containing fluorine or silicon, it is possible to form a water-repellent DLC in which the entire DLC film contains fluorine or silicon.

The water-repellent DLC thin film including the water-repellent layer on the front surface thereof can be formed, for example, by forming a DLC thin film or a DLC thin film containing fluorine or silicon, and then dipping the film into a fluorine-based water-repellent coating agent.

In a case in which the distal end of the cutting edge is sharpened (that is, the radius of curvature R1 of the distal end E is set to a predetermined thickness) as in the case of the blade body 1, film forming by a PVD method (physical vapor deposition method) may cause chipping due to damage to the cutting edge, thereby making the film forming conditions and control more complicated. When a CVD method is utilized, a water-repellent DLC thin film can be easily formed while damage to the cutting edge is reduced, and therefore the CVD method is one of favorable methods for forming a DLC thin film.

### Examples

Hereinafter, the present invention will be described in more detail with reference to Example. However, the present invention is not limited to the following Example as long as the gist of the present invention is not changed.

### [Evaluation]

### (Measurement of contact angle of water)

A contact angle of water on a cutting edge was measured using LSE100T made by NICK for a blade of a present example on which a water-repellent DLC thin film is formed and for a comparative microtome blade. At three points along the cutting edge of each blade in the length direction, that is, at the left position (a position 10 mm from the left end of the blade), the center position (a position 40 mm from the left end of the blade), and the right position (a position 70 mm from the left end of the blade), 0.01 to 0.12 µL of pure water was dropped onto the cutting edge of the blade at room temperature and, after approximately 1000 ms, a contact angle (static contact angle) was measured according to the θ/2 method, and the mean value of the contact angles at these three points was taken as the contact angle of water.

### (Slicing test)

The microtome blade manufactured under conditions of the present example was attached to a microtome, and a slicing test was conducted. For the microtome, a sliding microtome was used in which, as shown in Figure 5, the cutting edge of the blade attached to a holder (not shown in the drawing) was disposed to form a predetermined angle (α being 27.5° in the present example) with respect to a reference line L11, and the blade is reciprocally moved in a direction orthogonal to the reference line L11 to slice an object to be cut, thereby forming a section. The microtome blade was used in a state in which a mark M (see Figure 5) was applied at one end portion of the microtome blade to distinguish the front side from the rear side.

During the slicing test, the cutting edge is inclined with respect to the reference line L11, and the object to be cut is reciprocally moved in a direction orthogonal to the reference line L11, so that the position at which the cutting edge first comes into contact with the object to be cut remains the same. A mark line was provided along the width direction to enable the blade to be located at the same position as the original position relative to the object to be cut when the blade is removed and attached again.

### (Adhesion evaluation)

Cutting chips produced when a pig femur was cut with a saw were degreased with ethanol and then dried. Thereafter, chips having a size of 1 mm or less (chips having a diameter of 0.5 mm being mainly selected) were grasped with tweezers, embedded into an internal organ to be embedded, the embedding process was performed, and the obtained material was used as an object to be cut.

Using the prepared object to be cut, slicing tests at a thickness of 2 µm to 4 µm were repeatedly conducted according to the method described in the above-mentioned slicing test. When the water-repellent DLC thin film at the cutting edge peels off, the thin section no longer curls. Therefore, the curl states of the first and twentieth thin sections were checked to evaluate adhesion. Adhesion was evaluated according to the following criteria.
O: Curled with a diameter of 1 mm or less.
△: No curl, or all of the thin sections curled with a large curl diameter (2 mm or more)
×: Difficult to cut

### (Cutting performance evaluation)

Using embedded specimens obtained by embedding a pig stomach, brain, kidney, liver, and lung in paraffin, each embedded specimen was cut out 500 times according to the method described in the above-mentioned slicing test. The curl states of the cut-out thin sections were checked and evaluated according to the following criteria.
O: Curled with a diameter of 1 mm or less.
△: No curl, or all of the thin sections curled with a large curl diameter (2 mm or more)
×: Difficult to cut

### (Chipping evaluation)

Slicing tests were conducted in the same manner as in the cutting performance evaluation. Performance was checked after the first slice (initial performance) and, thereafter, the presence or absence of scalpel scratches on the thin slice sample was checked every 100 slices. When scalpel scratches were found on the thin slice sample, the test was temporarily stopped at that stage to check the microtome blade.

The area of the microtome blade suspected to have caused the scalpel scratches was observed with a microscope, which is capable of magnifications from 500 times to 2500 times, to check the depth and the width of chipping. The chipping was evaluated according to the following criteria.
O: Less than 2 µm in both depth and width directions
△: 2 µm or more in both depth and width directions
×: Difficult to cut

### (Measurement of R1, R2, and d of microtome blade)

The cutting edge of the microtome blade of the present example was observed using an electron microscope (electron-beam cutting-edge-distal-end analyzing device ERA-8900 made by ELIONIX INC.) at a magnification of 20,000 times to observe the state of the front surface.

Using a blade body before formation of the water-repellent DLC thin film, the radius of curvature (R1) of the distal end E was measured at three points along the cutting edge in the length direction, that is, at the left position (a position 10 mm from the left end of the blade), the center position (a position 40 mm from the left end of the blade), and the right position (a position 70 mm from the left end of the blade), and the average of the radii of curvature (R1) of the distal end E was then obtained.

Next, the water-repellent DLC thin film was formed on the blade body and, thereafter, the radius of curvature (R2) of the distal end F was measured at three points along the cutting edge in the length direction, that is, at the left position (a position 10 mm from the left end of the blade), the center position (a position 40 mm from the left end of the blade), and the right position (a position 70 mm from the left end of the blade), and the average of the radii of curvature (R2) of the distal end F was then obtained.

For the film thickness (d) of the water-repellent DLC thin film, the difference between the radius of curvature (R2) of the distal end F and the radius of curvature (R1) of the distal end E was calculated for each of the above-mentioned three points, and the average of these differences was obtained.

### <Comparison Example 1>

A blade body formed of the following material and having the following shape was attached in a chamber of a plasma CVD vapor deposition device, and a DLC thin film was formed. Next, the DLC thin film was dipped into a fluorine-based water-repellent coating agent to form a water repellent monomolecular film, thereby forming a water-repellent DLC thin film containing carbon and fluorine.
Blade body: WC-Co alloy (Co content 19 mass%)
Blade length L: 80 mm
Thickness t: 0.25 mm
Width W: 8 mm, width W1: 7.3 mm, width W2: 0.7 mm
Wedge angle θ: 28 degrees
Radius of curvature (R1) of distal end E of sharpened portion: 40 nm

When the cutting edge after formation of the water-repellent DLC thin film was observed with the optical microscope, the water-repellent DLC thin film exhibited significant unevenness. Particularly, the distal end (ridge portion) of the cutting edge exhibited large irregularities in film formation, and the film thickness (d) of the formed film was more than 150 nm.

### <Example 1>

A blade body the same as that used in Comparison Example 1 was attached in a chamber of a plasma CVD vapor deposition device, and a DLC thin film was formed. Next, the DLC thin film was dipped into a fluorine-based water-repellent coating agent to form a water repellent monomolecular film, thereby forming a water-repellent DLC thin film containing carbon and fluorine. In the manufactured blade, the radius of curvature (R2) of the distal end F including the water-repellent DLC thin film was 150 nm.

When the cutting edge after formation of the water-repellent DLC thin film was observed with the optical microscope, it was found that, in the microtome blade of Example 1, the water-repellent DLC thin film had almost no unevenness and was uniformly formed.

When the contact angle of water on the cutting edge of the microtome blade of Example 1 was measured, the values were 116.1 degrees at the left position, 120.1 degrees at the center position, and 116.3 degrees at the right position, and the average contact angle was 117.5 degrees.

### (Slicing test 1)

Figure 6 shows images of tissues at a magnification of 500 times, these tissues being obtained by attaching the manufactured blade to a sliding microtome, and then slicing an embedded specimen, which was prepared by embedding a pig liver cell, into thin slices having a thickness of 2 µm. Figure 6(A) is the image of the thin slice that is cut out using the microtome blade of Comparison Example 1, and Figure 6(B) is the image of the thin slice that is cut out using the microtome blade of Example 1. When the microtome blade of Comparison Example 1 was used, scalpel scratches occurred, whereas when the microtome blade of Example 1 was used, the occurrence of scalpel scratches was suppressed, and a favorable sample was obtained.

### (Slicing test 2)

Slicing tests were conducted using the microtome blade of Example 1. Before a bone, which is an object to be cut, was cut out, paraffin was used as an object to be cut, and was sliced 10 times at a thickness of 2 µm. After the bone was sliced 90 times, paraffin was used as an object to be cut, and was sliced at a thickness of 2 µm.

As a comparison, the same experiment was conducted using a microtome blade coated by fluororesin (steel blade, blade body: stainless steel, R2: approximately 25 nm, wedge angle: 35 degrees, contact angle of water on coating film (average between three points): 88.6 degrees).

The results are shown in table 1. As shown in table 1, it can be understood that when the microtome blade of Example 1 was used, the thickness of the thin slices was more stable than that obtained with the comparative microtome blade.

**[Table 1]**

| | Example 1 | | Comparison | |
|---|---|---|---|---|
| | Film thickness of thin slice/µm | | Film thickness of thin slice/µm | |
| | Before cutting out | After cutting out | Before cutting out | After cutting out |
| Sample 1 | 2.882 | 2.557 | 3.747 | 2.762 |
| Sample 2 | 1.997 | 2.756 | 4.058 | 2.409 |

### (Slicing test 3)

Using the microtome blade of Example 1, slicing tests were conducted on a human lung as an object to be cut, in accordance with the procedures approved by an ethics committee. In a human lung, blood vessels are densely distributed, and many of the blood vessels are calcified. Therefore, the human lung is one of the objects to be cut that are likely to cause chipping. The comparative steel blade was used by changing the cutting position to three different positions thereof, and was replaced after slicing 50 times at each position, for a total of 150 times. In contrast, the microtome blade of Example 1 could slice 660 times or more at a single position without causing any problem.

### <Examples 2 and 3>

A blade body made of WC-Co alloy having a Co content of 12 mass% or 19 mass%, and having the same shape as that in Example 1 was used. Blades having the radii of curvature (R2) of the distal end F, including the water-repellent DLC thin film, of 120 µm and 140 µm were manufactured in the same manner as Example 1 except that film forming conditions were changed.

Results of adhesion evaluation of the water-repellent DLC thin film are shown in table 2.

**[Table 2]**

| Co content (wt%) in cemented carbide | 12 | 19 |
|---|---|---|
| Adhesion of water-repellent DLC thin film (radius of curvature R2: 120 µm) | ○ | ○ |
| Adhesion of water-repellent DLC thin film (radius of curvature R2: 140 µm) | Δ | ○ |

Water-repellent DLC thin films having thicknesses shown in table 3 were formed in the same manner as Example 1 except that a blade body formed of the following material and having the following shape was attached to a plasma CVD vapor deposition device, and film forming conditions are changed.
Blade body: WC-Co alloy (Co content 24 mass%)
Blade length L: 80 mm
Thickness t: 0.25 mm
Width W: 8 mm, width W1: 7.3 mm, width W2: 0.7 mm
Wedge angle θ: 20° to 35°

Table 3 shows results of evaluation of adhesion, cutting performance, and chipping on the manufactured blades.

**[Table 3]**

| No. | 1 | 2 | 3 | 4 | 5 | 6 | 7 |
|---|---|---|---|---|---|---|---|
| R1 | 10 | 10 | 50 | 50 | 50 | 75 | 75 |
| R2 | 36 | 150 | 75 | 130 | 150 | 100 | 150 |
| d | 26 | 140 | 25 | 80 | 100 | 25 | 75 |
| Adhesion | Δ | ○ | ○ | ○ | ○ | ○ | ○ |
| Cutting performance | ○ | ○ | ○ | ○ | ○ | ○ | ○ |
| Chipping | Δ | Δ | ○ | ○ | ○ | ○ | ○ |
| Remarks | Comparison Example | Comparison Example | | | | | |

| No. | 8 | 9 | 10 | 11 | 12 | 13 | |
|---|---|---|---|---|---|---|---|
| R1 | 75 | 75 | 100 | 150 | 150 | 180 | |
| R2 | 200 | 400 | 150 | 200 | 500 | 400 | |
| d | 125 | 325 | 50 | 50 | 350 | 220 | |
| Adhesion | Δ | × | ○ | Δ | × | × | |
| Cutting performance | Δ | × | ○ | Δ | × | × | |
| Chipping | ○ | × | ○ | ○ | × | × | |
| Remarks | | Comparison Example | | | Comparison Example | Comparison Example | |

### Industrial Applicability

The blade for microtomes of the present invention can be used by attaching the blade to a microtome used for slicing various tissues, and is therefore industrially useful.

### Reference Signs List

- 1, 3: blade body
- 11: rake surface
- 12: flank surface
- 1A, 3A: base portion
- 1B, 3B: sharpened portion
- 2: water-repellent DLC thin film
- 10, 30: blade
- A1: first region
- A2: second region
- A3: third region
- E, F: distal end
- R1: radius of curvature of distal end E
- R2: radius of curvature of distal end F
- d: film thickness
- t: thickness of blade body
- θ: wedge angle
- L: blade length
- W, W1, W2: width
- V, H: reference line

## Claims

1. A blade for microtomes, the blade comprising:
a blade body including a base portion and a sharpened portion, the base portion having a flat plate shape, the sharpened portion being formed at a tip of the base portion; and
a water-repellent DLC thin film formed on the sharpened portion, wherein
a contact angle of water on the water-repellent DLC thin film is 90 degrees or more,
a radius of curvature (R1) of a distal end of the sharpened portion is 15 nm or more and 150 nm or less,
a radius of curvature (R2) of a distal end of a cutting edge including the water-repellent DLC thin film is 30 nm or more and 250 nm or less, and is larger than the radius of curvature (R1) of the distal end of the sharpened portion, and
a film thickness (d) of the water-repellent DLC thin film is 15 nm or more and 150 nm or less.

2. The blade for microtomes according to claim 1, wherein a wedge angle θ is 15 to 50 degrees.

3. The blade for microtomes according to claim 1 or claim 2, wherein the water-repellent DLC thin film contains fluorine and/or silicon.

4. The blade for microtomes according to claim 1 or claim 2, wherein the blade body is made of cemented carbide.

5. The blade for microtomes according to claim 4, wherein a binder content in the cemented carbide is 0 mass% or more and 24 mass% or less.

6. The blade for microtomes according to claim 1 or claim 2, wherein the blade body is made of stainless steel.

7. The blade for microtomes according to claim 1 or claim 2, wherein the contact angle of water on the water-repellent DLC thin film is 90 degrees or more and 135 degrees or less.

8. The blade for microtomes according to claim 1 or claim 2, wherein the water-repellent DLC thin film is a thin film formed of a DLC film exhibiting water repellency, or a thin film formed by forming a water-repellent layer on a surface of a DLC film.

9. The blade for microtomes according to claim 8, wherein the water-repellent layer is a water repellent monomolecular film.
